(19) Europäisches Patentamt
European Patent Office
Office européen des brevets

(11) EP 1 849 257 B1

(12) **FASCICULE DE BREVET EUROPEEN**

(45) Date de publication et mention de la délivrance du brevet:
**06.06.2012 Bulletin 2012/23**

(21) Numéro de dépôt: **06709327.8**

(22) Date de dépôt: **15.02.2006**

(51) Int Cl.:
***H04L 12/18*** *(2006.01)* ***H04L 29/06*** *(2006.01)*

(86) Numéro de dépôt international:
**PCT/FR2006/000352**

(87) Numéro de publication internationale:
**WO 2006/087472 (24.08.2006 Gazette 2006/34)**

(54) **PROCEDE ET EQUIPEMENTS DE CONTROLE D'ACCES A DES FLUX IP MULTICAST**

VERFAHREN UND AUSRÜSTUNG ZUR STEUERUNG DES ZUGRIFFS AUF MULTICAST-DATENPAKETFOLGEN

METHOD AND EQUIPMENT FOR CONTROLLING ACCESS TO MULTICAST IP FLOWS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **18.02.2005 FR 0501704**

(43) Date de publication de la demande:
**31.10.2007 Bulletin 2007/44**

(73) Titulaire: **FRANCE TELECOM**
**75015 Paris (FR)**

(72) Inventeurs:
- **BOURDON, Gilles**
  **91160 Longjumeau (FR)**
- **JACQUENET, Christian**
  **35131 Pont-Péan (FR)**

(74) Mandataire: **Cabinet Plasseraud**
**52, rue de la Victoire**
**75440 Paris Cedex 09 (FR)**

(56) Documents cités:
**EP-A- 1 480 405** **EP-A- 1 492 381**
**US-B1- 6 275 859**

- **NORIHIRO ISHIKAWA NAGATSUGU YAMANOUCHI OSAMU TAKAHASHI: "IGMP Extension for Authentication of IP Multicast Senders and Receivers" IETF STANDARD-WORKING-DRAFT, INTERNET ENGINEERING TASK FORCE, IETF, CH, no. 1, 5 août 1998 (1998-08-05), XP015030298 ISSN: 0000-0004**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 849 257 B1

## Description

L'invention concerne le domaine des télécommunications, en particulier le contrôle de l'accès à des flux IP Multicast.

Dans la technique de diffusion IP Multicast, les paquets IP Multicast sont diffusés en utilisant une adresse IP destinataire particulière, dite adresse Multicast.

Un flux Multicast est caractérisé par son adresse source S et par son adresse de groupe G, chaque flux Multicast pouvant donc être représenté par un couple (S, G) unique. Deux flux Multicast distincts peuvent ainsi avoir la même adresse source S ou la même adresse de groupe G.

La particularité des flux IP Multicast porte essentiellement sur le fait que les données support de ces flux sont transmises à l'équipement terminal demandeur, par exemple un décodeur audio-visuel, sur requête de ce dernier transmise sur le réseau IP.

La demande de réception, ou d'arrêt de réception d'un flux Multicast s'effectue selon le protocole IGMP, pour Internet Group Management Protocol en anglais, défini à l'IETF par les recommandations RFC 1112, RFC 2236 et RFC 3376 ou selon le protocole MLD, pour Multicast Listener Discovery en anglais, défini par les recommandations RFC 2710, RFC 3810.

Sur réception d'un message de requête de réception, message du type "Membership report", précisant l'adresse source de diffusion souhaitée, le premier équipement de télécommunication du réseau IP capable d'interpréter ce message de requête transmet le flux de données Multicast correspondant sur le lieu d'où provient ce message de requête.

Un message de requête de diffusion de flux Multicast peut également se rapporter à un ensemble de sources pour un groupe G donné, le flux Multicast étant alors désigné (*,G) et correspondant alors à une somme des flux émis par les différentes sources vers ce même groupe.

Dans le contexte de la diffusion de flux Multicast et de la présente demande, on désigne par équipement de collecte l'équipement réseau prenant en charge le message de requête IGMP/MLD d'un utilisateur, afin d'envoyer à ce dernier le flux de données Multicast correspondant.

A l'heure actuelle, les protocoles de transmission de message de requête de diffusion Multicast, de type IGMP, ne définissent pas de méthode d'authentification ni d'autorisation d'un utilisateur demandeur à solliciter la transmission d'un flux Multicast en réseau.

Des tentatives dans ce but ont été proposées auprès de l'IETF suggérant de modifier les messages de requête précités dans le but d'acheminer des informations d'authentification vers une plateforme d'authentification/autorisation. La réussite de l'authentification et de l'autorisation permet la prise en compte du message de requête de l'utilisateur demandeur par l'équipement de collecte.

La proposition précitée, finalement non avenue, pose les problèmes suivants :

- impact majeur sur les protocoles de gestion de flux Multicast existants, en raison de l'ajout de couches d'authentification sur les équipements d'accès au réseau et sur l'équipement terminal de l'utilisateur ;
- nécessité d'un accès à une plate-forme d'autorisation à chaque message de requête de flux Multicast transmis par un utilisateur, processus qui peut augmenter le temps de réception du flux Multicast de façon sensible dans le cas de diffusion Multicast de programmes TV sur ligne haut débit de type ADSL par exemple.

Une autre approche d'autorisation a en outre été proposée. Selon cette dernière, dans le but de déterminer le droit d'un utilisateur à demander la diffusion d'un flux Multicast déterminé, le terminal de utilisateur demandeur sollicite cette autorisation auprès d'une plateforme d'autorisation spécifique connectée au réseau IP. Sur réception de la demande d'autorisation, la plateforme d'autorisation retourne une acceptation ou un rejet de l'autorisation, selon les droits à recevoir le flux Multicast demandé dont dispose utilisateur. Sur réception de l'autorisation acceptée, le terminal de l'utilisateur émet alors à destination du réseau un message de requête de diffusion Multicast, du type requête IGMP, afin de recevoir le flux Multicast correspondant.

Cette dernière solution présente les inconvénients suivants :

- nécessité d'un accès à une plateforme d'autorisation à chaque message de requête de diffusion des flux Multicast, ce qui, comme dans le cas de la proposition précédente, peut augmenter le temps de réception du flux Multicast de façon sensible dans le cas de diffusion Multicast de programme TV sur ligne haut débit de type ADSL;
- problème de sécurité dans le cas où le terminal de l'utilisateur est modifié pour envoyer un message de requête de diffusion Multicast de type IGMP vers le réseau IP sans demande préalable des droits à la plateforme d'autorisation.

Enfin, la demande de brevet EP-A- 1 492 381 décrit la seule étape de connexion du terminal utilisateur à l'équipement de collecte.

La présente invention a pour objet de remédier à l'ensemble des inconvénients des propositions de l'art antérieur, par la mise en oeuvre d'un procédé et d'un système local de contrôle d'accès à des flux IP Multicast.

En particulier, ce but est atteint en développant au niveau de tout équipement de collecte une fonction locale spécifique d'acceptation ou de refus des messages de requête de diffusion IP Multicast.

Un autre objet de la présente invention est, en outre, la mise en oeuvre d'un procédé et d'équipements de contrôle d'accès à des flux IP Multicast grâce auxquels les protocoles de transmission de message de requête de diffusion IP Multicast IGMP ou MLD sont inchangés, ce qui permet de garantir une totale compatibilité du procédé et du système objets de l'invention avec les matériels terminaux utilisateur existants.

Un autre objet de la présente invention est, en outre, la mise en oeuvre d'un procédé et d'un système local de contrôle d'accès à des flux IP Multicast dans lesquels le volume des échanges protocolaires avec une entité d'autorisation, chargée d'accepter ou de refuser l'autorisation d'accès demandée, est réduit de manière significative.

Le procédé de contrôle d'accès à un flux IP Multicast demandé par le terminal utilisateur à un équipement de collecte de messages de requête de diffusion de flux IP Multicast connecté au réseau IP, objet de la présente invention, est remarquable en ce que, suite à la connexion de ce terminal utilisateur à cet équipement de collecte, celui-ci consiste au moins à transmettre de cet équipement de collecte vers un serveur de contrôle d'accès, connecté au réseau IP, un message de demande d'autorisation d'accès. Suite à une authentification et/ou une identification et à une vérification réussies des droits d'accès dont dispose le terminal utilisateur par ce serveur de contrôle d'accès, il consiste à transmettre de ce serveur de contrôle d'accès vers cet équipement de collecte un message d'acceptation d'autorisation d'accès comportant au moins un filtre Multicast. Sinon, suite à un échec d'authentification et/ou d'identification et de vérification réussies des droits d'accès dont dispose ce terminal utilisateur par le serveur de contrôle d'accès, il consiste à transmettre de ce serveur de contrôle d'accès vers cet équipement de collecte un message de refus d'autorisation d'accès pour inhiber la connexion du terminal utilisateur.

Le procédé de contrôle d'accès à un flux IP Multicast objet de la présente invention trouve application au contrôle et à la gestion de la diffusion des flux Multicast sur réseau IP, réseau local d'entreprise et/ou réseau Internet, et à la distribution des applications et/ou services tels que applications multimédia du type ligne TV sur ADSL véhiculé (e)s par les flux IP Multicast précités.

Le procédé objet de l'invention sera mieux compris, ainsi que les équipements permettant la mise en oeuvre de ce dernier, à la lecture de la description et à l'observation des dessins ci-après dans lesquels:

- la figure 1 représente, à titre purement illustratif, un diagramme spatio-temporel des étapes essentielles de mise en oeuvre du procédé objet de la présente invention,
- la figure 2a représente, à titre purement illustratif, une variante de mise en oeuvre du procédé objet de l'invention lors d'une phase de changement d'autorisation d'accès proposée pour un terminal utilisateur spécifique,
- la figure 2b représente, à titre purement illustratif, une variante de mise en oeuvre du procédé objet de l'invention lors d'une phase de renouvellement d'autorisation d'accès proposée pour un terminal utilisateur spécifique,
- la figure 3a représente, à titre purement illustratif, la structure d'un filtre Multicast permettant la mise en oeuvre du procédé objet de la présente invention,
- la figure 3b représente, à titre purement illustratif, une architecture spécifique de mémorisation de filtres Multicast permettant la mise en oeuvre du procédé objet de la présente invention,
- la figure 4a représente, à titre illustratif, un serveur de contrôle d'accès, conforme à l'objet de la présente invention,
- la figure 4b représente, à titre illustratif, un équipement de collecte conforme à l'objet de la présente invention.

Une description plus détaillée du procédé de contrôle d'accès à un flux IP Multicast demandé, par un terminal utilisateur, à un équipement de collecte connecté au réseau IP sera maintenant donnée en liaison avec la figure 1 et les figures suivantes.

D'une manière générale, on considère un terminal utilisateur UT non représenté au dessin de la figure 1, connecté à un réseau IP. Le terminal utilisateur précité peut procéder à la transmission vers l'équipement de collecte CE d'un message de requête de connexion et de diffusion de flux IP Multicast de manière totalement classique.

Le message de requête de diffusion de flux IP Multicast correspond par exemple à un message de requête transmis conformément au protocole IGMP ou au protocole MLD tel que mentionné précédemment dans la description.

En référence à la figure 1, le procédé objet de la présente invention consiste au moins à transmettre de l'équipement de collecte CE vers un serveur de contrôle d'accès ACS, connecté au réseau IP, un message de demande d'autorisation d'accès noté AAD sur la figure précitée.

Sur la même figure on a noté 1 une étape de préparation du message de demande d'autorisation d'accès de données AAD et 2 l'opération proprement dite de transmission du message AAD précité vers le serveur de contrôle d'accès ACS.

L'étape 2 précitée est alors suivie d'une étape 3 exécutée au niveau du serveur de contrôle d'accès ACS consistant en une authentification et/ou une identification du terminal utilisateur et en une vérification des droits d'accès dont dispose le terminal utilisateur UT. Cette étape notée 3 est exécutée par le serveur de contrôle d'accès ACS et

représentée par la relation symbolique

$$\circlearrowleft_{3}\ \mathcal{V}(AAR) = \text{vraie}$$

On indique que les critères et les processus de mise en oeuvre d'authentification et de vérification des droits d'accès peuvent être des critères et des processus classiques lesquels, pour cette raison, ne seront pas décrits en détail.

Sur authentification et/ou identification et vérification réussies des droits d'accès à l'étape 3, le procédé consiste alors à transmettre en une étape 4 du serveur de contrôle d'accès ACS vers l'équipement de collecte CE, un message d'acceptation d'autorisation d'accès AAA. Le message précité comprend au moins un filtre Multicast.

L'étape 4 précitée est alors suivie d'une étape 5 exécutée au niveau de l'équipement de collecte CE laquelle consiste à permettre la connexion du terminal utilisateur UT à l'équipement de collecte CE, ainsi qu'à installer dans ce dernier le ou les filtres Multicast transportés lors de l'étape 4.

Au contraire, suite à un échec d'authentification et/ou d'identification du terminal utilisateur et de vérification réussies des droits d'accès dont dispose le terminal utilisateur UT, cette étape étant représentée par l'étape 3' de la figure 1 au niveau du serveur d'authentification ACS et symbolisé par la relation

$$\circlearrowleft_{3'}\ \mathcal{V}(AAR) = \text{faux}$$

le procédé objet de l'invention est poursuivi par une étape 4' consistant à transmettre, du serveur de contrôle d'accès ACS vers l'équipement de collecte CE, un message de refus d'autorisation d'accès AAR. Le message transmis à l'étape 4' précité permet alors d'inhiber en une étape 5' exécutée au niveau de l'équipement de collecte CE la connexion du terminal utilisateur à ce dernier.

Toutefois, et selon un mode de mise en oeuvre préférentiel non limitatif du procédé objet de la présente invention, le message d'acceptation d'autorisation d'accès AAA comporte avantageusement au moins un ensemble de filtres Multicast, lesquels sont bien entendu destinés à conduire le contrôle d'accès proprement dit suite à la réception du message AAA après l'étape 4 de transmission de ce dernier par l'équipement de collecte CE.

En particulier, selon un aspect remarquable du procédé objet de la présente invention, chaque filtre Multicast comporte au moins une valeur de type de filtre par autorisation ou refus de transmission d'un message de requête de diffusion IP Multicast, cette requête de diffusion Multicast étant définie par exemple par le couple d'adresse S, G de la source S de la diffusion Multicast et du groupe G considéré.

Ainsi que représenté sur la figure 1 précitée, pour exécuter l'étape 4 de transmission du message d'autorisation d'acceptation d'accès AAA accompagnée de l'ensemble des filtres notés $(MFj)_1^N$, j désignant une référence de filtre MF par exemple, l'on procède à l'étape 3 de la figure 1 à une récupération des droits utilisateur sur le flux Multicast pour traduire en termes d'un ensemble de filtres IP Multicast l'ensemble des droits précités.

Dans ce but, outre un champ comportant une valeur de type de filtre par autorisation ou refus de transmission d'un message de requête de diffusion IP Multicast, chaque filtre peut comporter avantageusement au moins l'adresse IP(S) de la source de diffusion du flux IP Multicast, l'adresse IP(G) du groupe Multicast destinataire de la diffusion Multicast, une valeur fonctionnelle de mise à jour par adjonction, ou suppression d'un filtre IP Multicast existant, dont le rôle sera décrit ultérieurement dans la description, et un numéro d'identification de filtre IP Multicast, ce numéro d'identification de filtre étant lié à l'indice j précédemment mentionné.

En conséquence, sur la figure 1, le message d'acceptation d'autorisation d'accès est représenté par la relation

$$AAA(MFj)_1^N.$$

Le procédé objet de la présente invention tel que décrit en liaison avec la figure 1 peut avantageusement être mis en oeuvre grâce à la famille des protocoles de transmission de messages de type AAA pour Authentication Authorization, Accounting en anglais, le serveur de contrôle d'accès ACS étant, dans cette hypothèse, un serveur de même type serveur AAA mettant plus particulièrement en oeuvre le protocole dit protocole RADIUS.

Le procédé objet de la présente invention peut également être mis en oeuvre grâce au protocole DIAMETER

et, dans cette hypothèse, l'échange de messages entre l'équipement de collecte CE et, le serveur de contrôle d'accès ACS est effectué selon ce protocole, le serveur de contrôle d'accès précité étant lui-même un serveur de type serveur AAA mettant plus particulièrement en oeuvre le protocole DIAMETER.

Le procédé objet de la présente invention tel que décrit en liaison avec la figure 1 peut être mis en oeuvre en particulier lors d'une demande de connexion d'un terminal utilisateur UT ou en tout cas pour toute demande de connexion d'un terminal utilisateur à un équipement de collecte.

Le procédé objet de la présente invention permet également de mettre en oeuvre différentes variantes particulières lesquelles permettent en fait d'exécuter des opérations, telles que le changement d'autorisation d'accès, alors que les droits par exemple de l'utilisateur sont toujours valides mais que ces droits demandent un changement en vue d'une modification de promotion d'accès ou autre par exemple, respectivement lors d'un renouvellement des droits d'un utilisateur déterminé, les droits précités étant alors considérés comme toujours valables mais impérativement renouvelables. Le changement ou le renouvellement d'autorisation d'accès sont exécutés par une opération réalisée sous l'autorité du seul serveur de contrôle d'accès ACS.

Une variante de réalisation de mise en oeuvre du procédé objet de la présente invention dans une application à un changement d'autorisation d'accès sera maintenant donnée en liaison avec la figure 2a. On conçoit en particulier que dans cette situation le renouvellement est également mis en oeuvre sous l'autorité du seul serveur de contrôle d'accès ACS dans les conditions ci-après.

Suite à la transmission du message d'acceptation d'autorisation, telle que décrite précédemment en figure 1, le terminal utilisateur considéré étant connecté, le procédé objet de l'invention dans la variante selon la figure 2a consiste par exemple, sous le contrôle du serveur de contrôle d'accès ACS à transmettre du serveur de contrôle d'accès précité vers l'équipement de collecte CE un message de changement d'autorisation d'accès noté AC.

De préférence, ainsi que représenté en figure 2a, le message de changement d'autorisation d'accès précité comporte la transmission de filtres Multicast permettant d'exécuter ce changement auprès de l'équipement de collecte CE.

A la figure 2a, l'étape de transmission précitée du message de changement d'autorisation est notée 2a.

Elle est suivie d'une étape 3a, exécutée au niveau de l'équipement de collecte CE, laquelle consiste à vérifier le changement d'autorisation proposé et à accepter et exécuter le changement d'accès précité sous l'autorité de l'équipent de collecte CE.

L'étape 3a est alors suivie d'une étape 4a consistant à transmettre de l'équipement de collecte CE vers le serveur de contrôle d'accès ACS un message de notification d'acceptation et d'exécution du changement d'autorisation d'accès par l'équipement de collecte, ce message étant noté :

$$\mathrm{NOT(AC)}.$$

Sinon, sur rejet et absence d'exécution du changement d'autorisation d'accès au niveau de l'équipement de collecte CE, cette étape de rejet étant notée 3a' sur la figure 2a, le procédé de changement d'autorisation d'accès objet de l'invention, tel que représenté en figure 2a, consiste à transmettre de l'équipement de collecte CE vers le serveur de contrôle d'accès ACS un message de refus et de non exécution du changement d'autorisation d'accès par l'équipement de collecte. Sur la figure 2a, le message de refus et de non exécution du changement d'autorisation d'accès est noté

$$\overline{\mathrm{NOT(AC)}}.$$

L'étape 4a' précitée peut alors être suivie au niveau du serveur de contrôle d'accès ACS d'une étape 5a' laquelle consiste à boucler le processus d'autorisation d'accès.

On comprend, en particulier, que dans le cadre du changement d'autorisation d'accès illustrée en figure 2a, le message de changement d'autorisation d'accès permet de transporter un ou plusieurs filtres IP Multicast dont la valeur fonctionnelle est une valeur fonctionnelle de mise à jour par adjonction ou suppression d'un filtre IP Multicast existant.

Une description plus détaillée d'une variante de mise en oeuvre du procédé objet de l'invention dans le cas d'un renouvellement d'une autorisation d'accès pour un utilisateur déterminé sera maintenant donnée en liaison avec la figure 2b.

Le procédé objet de l'invention tel que décrit en liaison avec la figure 2b, dans le cas d'un renouvellement d'une autorisation d'accès, ou en tout cas de la transmission d'une nouvelle autorisation d'accès, peut être mis en oeuvre tant que le terminal utilisateur UT considéré est connecté au réseau IP, à l'initiative du serveur de contrôle d'accès ACS.

En référence à la figure 2b et sous le contrôle du serveur de contrôle d'accès ACS, le procédé objet de l'invention consiste alors en une étape 1b consistant pour le serveur de contrôle d'accès ACS à prendre une décision de nouvelle

autorisation d'accès pour l'utilisateur UT considéré et à établir de nouveaux droits utilisateur sur le flux Multicast, ces nouveaux droits pouvant alors être traduits en termes de filtres Multicast, ainsi que décrit précédemment dans la description.

L'étape 1b précitée est alors suivie d'une étape 2b consistant à transmettre, du serveur de contrôle d'accès vers l'équipement de collecte CE, un message de renouvellement d'autorisation d'accès, lequel est noté AR sur la figure 2b précitée.

L'étape 2b est alors suivie d'une étape 3b exécutée par l'équipement de collecte CE laquelle consiste par exemple à prendre en compte la demande de renouvellement transmise par le serveur de contrôle d'accès ACS.

L'étape 3b est alors suivie d'une étape 4b consistant à transmettre, de l'équipement de collecte CE vers le serveur de contrôle d'accès ACS, un message de notification de prise en compte de la demande de renouvellement par l'équipement de collecte précitée.

L'étape 4b est alors suivie d'une étape 5b exécutée au niveau du serveur de contrôle d'accès ACS cette étape consistant à archiver la prise en compte de la demande de renouvellement d'autorisation d'accès pour l'utilisateur UT.

L'équipement de collecte CE procède à une étape 6b, étape analogue à l'étape 1 de la figure 1, par exemple, puis à une transmission, à l'étape 7b, d'une demande d'autorisation d'accès par un message AAD, lequel est pris en compte à l'étape 8b par le serveur de contrôle d'accès ACS.

Ce dernier ayant mémorisé et archivé la notification de prise en compte transmise à l'étape 4b de réautorisation d'accès et de l'archivage de cette demande à l'étape 5b, procède, à une étape 8b, à une vérification des droits d'accès pour le terminal utilisateur UT et à l'envoi de nouveaux droits ou d'une d’autorisation d'accès renouvelée par l'envoi à l'étape 9b d'un message d'acceptation d'autorisation d'accès, comportant également une pluralité de filtres Multicast $MF_j$ correspondant bien entendu aux nouveaux droits Multicast dans le cadre du renouvellement de l'autorisation.

L'étape 9b est alors suivie d'une étape 10b exécutée au niveau de l'équipement de collecte CE, cette étape étant bien entendu semblable à l'étape 5 de la figure 1 par exemple.

Dans le cas où, ainsi que représenté en figure 2b, la vérification des droits par le serveur de contrôle d'accès ACS ne peut être effectuée à l'étape 8b', cette dernière étape est alors suivie d'une étape 9b' de transmission d'un message de refus d'autorisation d'accès AAR comparable à l'étape 4' de la figure 1.

L'étape 9b' est suivie d'une étape 10b' exécutée par l'équipement de collecte CE prenant en compte le rejet de l'autorisation d'accès de manière semblable à l'étape 5' de la figure 1, sans pour autant inhiber la connexion du terminal utilisateur UT à l'équipement de collecte CE.

Enfin, d'une manière générale, on indique que toute demande d'autorisation ou de réautorisation d'accès transmise de l'équipement de collecte CE vers le serveur de contrôle d'accès ACS est suivie d'une étape de vérification des droits d'accès du terminal utilisateur demandeur exécuté par le serveur de contrôle d'accès ACS précité.

Une description plus détaillée des filtres IP Multicast et de leur expression dans les messages d'acceptation d'autorisation d'accès AAA précité sera maintenant donnée en liaison avec la figure 3a et la figure 3b.

Sur la figure 3a on a représenté en fait la structure d'un filtre IP Multicast permettant la mise en oeuvre du procédé objet de la présente invention. Un tel filtre, en particulier lorsque ce dernier est incorporé dans un message d'acceptation d'autorisation d'accès, comprend avantageusement, ainsi que représenté en figure 3 a, une valeur de type de filtre par autorisation ou refus de transmission d'un message de requête de diffusion IP Multicast défini par un couple d'adresses. Sur la figure 3a, la valeur de type est désignée Ty et est réputée prendre deux valeurs arbitraires 0 ou 1 lors de l'autorisation respectivement du refus de transmission d'un message de requête de diffusion IP Multicast.

Le filtre IP Multicast comporte également, ainsi que représenté sur la figure précitée, l'adresse IP(S) de la source de diffusion du flux IP Multicast, l'adresse IP(G) du groupe Multicast destiné à recevoir la diffusion Multicast considérée depuis la source d'adresse S et une valeur fonctionnelle notée FV de mise à jour par adjonction, ou suppression d'un filtre IP Multicast existant. Sur la figure 3a, la valeur fonctionnelle FV est réputée pouvoir prendre 2 valeurs distinctes arbitraires 0, 1 chaque valeur correspondant à la fonction d'ajout ou de suppression d'un filtre IP Multicast existant. En ce qui concerne la valeur 0, représentant par exemple la fonction d'adjonction, cette dernière peut correspondre à un remplacement, dans un filtre Multicast donné installé, des valeurs d'adresse de source S et/ou de groupe G, ainsi que des valeurs de type Ty.

Enfin, chaque filtre Multicast comprend un numéro d'identification de filtre IP Multicast noté en en-tête par exemple, IDMF.

L'ensemble des messages précités permet ainsi de véhiculer une pluralité de filtres Multicast, lesquels bien entendu, représentent l'ensemble des droits d'accès Multicast de chaque terminal utilisateur considéré UT.

En particulier, les échanges de messages précités peuvent être exécutés au moyen de la famille des protocoles AAA, tels que les protocoles RADIUS et DIAMETER précédemment mentionnés dans la description suivant le tableau 1 ci-après.

Tableau 1 : Application aux protocoles RADIUS et DIAMETER

| **Message AAA** | **Équivalent RADIUS (RFC 2865 + RFC 3576)** | **Équivalent DIAMETER (RFC 3588 + NASREQ)** |
|---|---|---|
| Demande d'autorisation d'accès | *Access-Request* | *AA-Request* |
| Demande d'autorisation | *Access-Request avec Service-Type = "Authorize-Only"* | *AA-Request avec attribut Auth-Request-Type = "Authorize-Only"* |
| Autorisation acceptée | *Access-Accept* | *AA-Answer + Result-Code Success (2xxx)* |
| Refus d'autorisation | *Access-Reject* | *AA-Answer + Result-Code AA-Answer + Result-Code Failure (3xxx ou 4xxx)* |
| Changement d'Autorisation | *CoA-Request* | ***Pas d'équivalence*** |
| Changement OK | *CoA-ACK* | *Re-Auth-Answer + Success Code (2xxx)* |
| Changement NOK | *CoA NAK* | *Re-Auth-Answer + Failure Code (3xxx ou 4xxx)* |
| Demande de réautorisation pour l'utilisateur | *CoA-Request avec attribut Service-Type = "Authorize-Only"* | *Re-Auth-Request avec attribut Auth-Request-Type = "Authorize-Only"* |
| Notification de prise en compte (demande de réautorisation) | *CoA NAK avec attribut Error-Cause = "Request Error-Cause = "Request Initiated", Service-Type = "Authorize-Only"* | *Re-Auth-Answer + Success Code (2xxx) + Success Code (2xxx) + Auth-Request-Type = "Authorize-Only"* |
| Autorisation acceptée + envoi des filtres multicast | *Access-Accept avec attribut transportant le ou les filtres (attribut VSA ou à normaliser)* | *AA-Answer + Result-Code Success (2xxx) avec attribut transportant le ou les filtres (attribut VSA ou à normaliser)* |
| Changement d'Autorisation + envoi des filtres multicast | *CoA-Request avec attribut transportant le ou les filtres (attribut VSA ou à normaliser)* | ***Pas d'équivalence*** |

En référence au tableau précité, le transport des filtres Multicast s'effectue alors par le moyen d'un attribut dédié à affecter par les entités assurant le contrôle d'accès et en particulier par le serveur de contrôle d'accès ACS.

Cet attribut peut être exécuté par un attribut de type VSA pour Vendor Specific Attribute.

Dans le tableau précité :

- la première colonne désigne les messages AAA c'est-à-dire les messages transmis et précédemment décrits avec les figures 1, 2a, 2b,
- la deuxième colonne désigne un mode d'implémentation des messages précités dans le cadre du protocole RADIUS selon la recommandation RFC 2865 et RFC 3576 de l'IETF pour Internet Engineering Task Force ;
- la troisième colonne désigne un mode d'implémentation des messages précités selon le protocole DIAMETER RFC 3588 + NASREQ. NASREQ est une proposition référencée actuellement draft-ietf-aaa-diameter-nasreq-17.txt, proposition ayant pour vocation à évoluer comme RFC.

Dans les colonnes précitées du tableau, les mentions en italique des deuxième et troisième colonnes font référence à la désignation officielle selon les recommandations correspondantes pour les protocoles RADIUS respectivement DIAMETER.

On notera en particulier que, le changement d'autorisation tel que décrit en liaison avec la figure 2a, par exemple, est exclusivement mis en oeuvre grâce au protocole RADIUS car le protocole DIAMETER ne permet pas, à l'heure actuelle, l'utilisation de messages spécifiques pour ce type d'opération.

Le nombre de filtres Multicast envoyés par message dépend de la taille maximale du message autorisé par le

protocole considéré. Il dépend également de la taille maximale qu'autorise le protocole pour le transport d'un attribut. Il est possible d'envoyer plusieurs fois le même attribut dans le même message. Le système de numérotation des filtres Multicast, c'est-à-dire l'attribution du numéro d'identification IDMF permet également de mettre en place les filtres précités en répétant plusieurs fois les échanges décrits précédemment.

Le format des filtres Multicast envoyés peut être optimisé par exemple en effectuant des regroupements du type :

- regroupement des filtres dont le type de filtre est le même, permission respectivement refus, selon l'opération à réaliser ajouter ou supprimer ;
- regroupement des opérations ajout ou suppression ;
- regroupement des sources devant être filtrées pour un groupe d'utilisateurs donnés ;
- regroupement des groupes devant être filtrés pour une source donnée. Sur réception du message d'acceptation d'autorisation d'accès, le message AAA des figures 1, 2b, et du message AC de la figure 2a en particulier du message précité comportant les filtres Multicast pour le terminal utilisateur considéré UT, l'équipement de collecte CE procède alors aux opérations suivantes :
- détermination du contexte propre à la gestion de la connexion utilisateur concerné pour l'installation des filtres, une telle opération ainsi que représenté en figure 3b peut consister à discriminer un identifiant d'utilisateur noté $UID_1$ à $UID_i$ sur la figure 3 et les informations de contexte correspondantes ;
- extraction proprement dite des filtres reçus par le protocole de type protocole AAA, cette extraction consistant en une lecture des différents champs de chaque filtre tel que représenté en figure 3 a,
- évaluation du contenu du filtre Multicast candidat à l'installation.

Dans cette opération, les filtres reçus pour une opération de suppression permettent alors la suppression des filtres existants sur la base, par exemple, du numéro de filtre, c'est-à-dire du numéro IDMF correspondant, les filtres étant, par exemple, mémorisés avec leur contexte utilisateur et leur identifiant de filtre IDMF désigné $MF_{11}$ à $MF_{M1}$ respectivement $MF_{1i}$ à $MF_{N1}$ sur la figure 3b. Les filtres peuvent également être supprimés sur la base du triplet S, G, type, c'est-à-dire la variable Ty. Dans le cas où il existe une incohérence entre le triplet S, G, Ty et le numéro du filtre, alors aucun filtre pouvant correspondre n'est supprimé. En l'absence d'incohérence, bien entendu, le filtre Multicast candidat à la suppression est alors supprimé.

Les filtres reçus pour une opération d'adjonction sont installés à la place indiquée par exemple par le numéro de filtre, ou selon une relation biunivoque, à une adresse mémoire de l'équipement de collecte CE.

Lorsque par exemple, le numéro de filtre n'est pas indiqué, l'équipement de collecte CE peut alors installer le filtre à la suite de la liste des filtres propres au contexte utilisateur dans l'ordre d'évaluation des filtres reçus et en affectant un numéro interne supérieur au numéro existant pour le contexte.

Si au contraire, le numéro de filtre spécifié fait référence à un filtre différent déjà en place, le nouveau filtre est implanté à la place de ce dernier.

En référence à la figure 3b, on indique que chaque filtre $MF_{11}$ à $MF_{M1}$ ou $MF_{1i}$ ; à $MF_{Ni}$; est stocké en conservant les champs suivants :

- le numéro d'ordre du filtre dans la liste des filtres Multicast présents dans le contexte utilisateur, c'est-à-dire le numéro d'identification IDMF ;
- l'adresse IP source adresse IP(S) du filtre Multicast considéré ou la désignation de toutes les adresses de source possibles ("*" ou encore représentables comme l'adresse IP 0.0.0.0) ;
- l'adresse IP du groupe Multicast G considérée ou la désignation de toutes les adresses de groupe possibles ("*" ou encore représentables comme l'adresse IP 0.0.0.0) ;
- le type de filtre, c'est-à-dire permission ou refus par la variable Ty permettant de déterminer l'interprétation qui doit être faite du filtre lors de l'évaluation d'une requête.

Ainsi, les informations stockées par l'équipement de collecte CE sont équivalentes à celles transportées par les messages d'acceptation d'autorisation d'accès AAA, bien que le format de stockage puisse apparaître différent du format de transport.

Seule l'information relative à l'opération d'ajout ou de suppression réalisée par l'équipement de collecte CE peut être supprimée, les filtres successifs étant stockés et mémorisés au niveau de l'équipement de collecte CE ainsi que représenté en figure 3b.

En ce qui concerne l'évaluation d'un message de requête de diffusion de flux IP Multicast par l'équipement de collecte CE, requête IGMP ou MLD, cette évaluation peut être effectuée de la manière suivante :

- détermination de la provenance de la requête permettant de retrouver le contexte de l'utilisateur concerné et découpage de la requête en demande de flux individuels : si la requête de demande de réception des flux S1, S2, S3,

G1, c'est-à dire des flux diffusés par les sources S1, S2, S3 pour le groupe G1, les requêtes obtenues par distribution des sources sur le groupe, c'est-à-dire les requêtes S1G1, S2G1, S3G1 sont évaluées de façon séparée ;

- avant la prise en compte des numéros d'ordre des filtres, les requêtes sont évaluées en premier face au filtre suivant :

  a) interdiction globale d'une source quels que soient les groupes, soit (S,*) ;
  b) interdiction globale d'un groupe quelles que soient les sources, soit (*, G).

- la requête est évaluée face à chaque filtre dans l'ordre donné par les numéros de filtre jusqu'à ce que la description du flux Multicast de la requête corresponde au filtre considéré ;
- la première action, permission ou refus, termine l'évaluation de la requête dans la liste des filtres ;
- en cas de non correspondance de la requête au filtre du contexte utilisateur, la requête est refusée par défaut. En particulier on peut considérer cependant que l'absence de filtre pour un utilisateur signifie l'absence de volonté de tout filtrage auquel cas toute requête est acceptée ;
- pour accepter par défaut une requête en fin d'évaluation il faut la présence d'un filtre de type permission avec S et/ou G valorisé à 0.0.0.0 et dont le numéro d'ordre place le filtre en fin de liste d'évaluation ;
- si la requête est acceptée, alors la commande de flux Multicast est poursuivie de façon transparente au processus de contrôle et d'autorisation. Si la requête est refusée, aucune action n'est engagée pour une commande de flux Multicast correspondant à la requête refusée.

Une description plus détaillée d'un serveur de contrôle d'accès à flux Multicast conforme à l'objet de la présente invention sera maintenant donnée en liaison avec la figure 4a.

En référence à la figure précitée, on indique que, outre une unité centrale de traitement CPU, une unité de mémoire de travail RAM et une unité d'entrée-sortie I/O permettant la connexion du serveur du contrôle d'accès ACS au réseau Internet ainsi que représenté en figure 4a, celui-ci comporte au moins un module générateur de messages d'autorisation d'accès, les messages AAA de la figure 1 et 2b et AC de la figure 2a, ce module générateur étant noté $MA_1$ sur la figure 4a. En particulier le module générateur peut consister en un module de programme $MA_1$, lequel est mémorisé dans le serveur de contrôle d'accès ACS et dans la zone de mémoire de programme $PROG_A$ de ce dernier. On comprend bien sûr que les messages d'acceptation comportent au moins un filtre Multicast tel que décrit en liaison avec la figure 3a et comportent, en particulier, au moins une valeur de type de filtre par autorisation ou refus de transmission d'un message de requête de diffusion IP Multicast défini par un couple d'adresses. Bien entendu, le serveur de contrôle d'accès ACS objet de l'invention comprend également d'autres modules générateurs de message notés MAx et correspondant, par l'appel en mémoire de travail RAM par la CPU, à la mise en oeuvre du procédé tel que décrit en liaison avec les figures 1 et 2a, 2b.

Une description plus détaillée d'un équipement de collecte CE d'un message de requête de diffusion IP Multicast conforme à l'objet de la présente invention sera également décrit en liaison avec la figure 4b.

En référence à cette figure, outre une unité centrale de traitement CPU, une mémoire de travail, RAM et des organes d'entrée-sortie I/O permettant la connexion de cet équipement de collecte CE au réseau Internet, celui-ci comporte au moins un module générateur d'un message de demande d'autorisation d'accès, c'est-à-dire du message AAD de la figure 1, 2a ou 2b. Ce module générateur peut correspondre par exemple, à un module de programme $MC_1$ mémorisé dans une zone de mémoire de programme $PROG_C$ de l'équipement de collecte CE et appelé par l'unité centrale dans la mémoire de travail de ce dernier pour exécution correspondante. De même, l'équipement de collecte CE comporte un module de mémorisation de messages d'acceptation d'autorisation d'accès, module noté $MC_2$ sur la figure 4b, c'est-à-dire des messages AAA ainsi que des filtres Multicast contenus dans ces derniers. Il comporte également un module $MC_3$ d'installation des filtres Multicast précités ainsi que décrits précédemment dans la description. Les modules $MC_2$ et $MC_3$ correspondent également à des modules de programme mémorisés dans la mémoire de programme $PROG_C$ de l'équipement de collecte CE. Pour exécution, ces derniers sont appelés par la CPU dans la mémoire de travail RAM et exécution correspondante conformément au procédé décrit précédemment dans la description en liaison avec les figures 1, 2a, 2b. D'autres modules fonctionnels notés $MC_x$ peuvent être prévus dans la zone de mémoire de programme précitée. En particulier, un module $MC_4$ est prévu pour exécuter l'analyse des requêtes de diffusion IP Multicast vis-à-vis des filtres Multicast installés.

En ce qui concerne le module d'installation $MC_3$, celui-ci, pour chaque filtre Multicast reçu, exécute les opérations consistant à discriminer, à partir du message de requête de diffusion IP Multicast, les références du terminal utilisateur demandeur, à extraire du message d'acceptation d'autorisation de diffusion IP Multicast chaque filtre Multicast, évaluer le contenu du filtre Multicast candidat à l'installation ainsi que décrit précédemment dans la description, et, sur évaluation de la valeur fonctionnelle de suppression, supprimer le filtre Multicast existant correspondant, puis installer le filtre Multicast candidat à installation. Sinon sur évaluation de la valeur fonctionnelle d'adjonction ou de mise à jour du filtre candidat à installation, installer le filtre Multicast candidat à installation, ainsi que décrit précédemment dans la description.

L'invention couvre en outre un programme d'ordinateur enregistré sur un support de mémorisation comportant

une suite d'instructions pour exécution par un ordinateur ou un dispositif dédié, tel qu'un serveur de contrôle d'accès à un flux IP Multicast précédemment décrit en liaison avec la figure 4a. Il est remarquable en ce que, lors de cette exécution, cette suite d'instructions permet la mise en oeuvre des étapes d'authentification et/ou d'identification et de vérification des droits d'accès d'un terminal utilisateur et de transmission de ce serveur de contrôle d'accès vers un équipement de collecte d'un message d'acceptation ou de refus d'acceptation d'accès du procédé de contrôle d'accès à un flux IP Multicast demandé par ce terminal utilisateur, précédemment décrit en liaison avec les figures 1, 2a, 2b, 3a et 3b.

L'invention couvre enfin un programme d'ordinateur enregistré sur un support de mémorisation comportant une suite d'instructions pour exécution par un ordinateur ou un dispositif dédié, tel qu'un équipement de collecte d'un message de requête de diffusion IP Multicast émis par un terminal utilisateur, précédemment décrit en liaison avec la figure 4b. Il est remarquable en ce que, lors de cette exécution, cette suite d'instructions permet la mise en oeuvre de l'étape de transmission, de cet équipement de collecte vers un serveur de contrôle d'accès, d'un message de demande d'autorisation d'accès du procédé de contrôle d'accès à un flux IP Multicast demandé par ce terminal utilisateur, précédemment décrit en liaison avec les figures 1, 2a, 2b, 3a et 3b.

## Revendications

**1.** Procédé de contrôle d'accès à un flux IP Multicast demandé par un terminal utilisateur à un équipement de collecte (CE) de messages de requête de diffusion de flux IP Multicast connecté au réseau IP, dans lequel suite à la connexion par ce terminal utilisateur vers cet équipement de collecte, un message (AAD) de demande d'autorisation d'accès est transmis (1, 2) de cet équipement de collecte vers un serveur de contrôle d'accès (ACS), connecté au réseau IP, le procédé étant **caractérisé en ce que** :

- suite à une authentification et/ou une identification et à une vérification réussies des droits d'accès dont dispose ledit terminal utilisateur par ledit serveur de contrôle d'accès, le procédé consiste au moins à transmettre (3, 4) dudit serveur de contrôle d'accès vers ledit équipement de collecte un message d'acceptation d'autorisation d'accès $(\mathrm{AAA}(MF_j)_1^N)$ comportant au moins un filtre Multicast ($MF_j$), à installer (5) dans ledit équipement de collecte le au moins un filtre Multicast transmis et à analyser un message de requête de diffusion de flux IP Multicast transmis par le terminal utilisateur vis-à-vis dudit au moins un filtre Multicast installé, chaque filtre Multicast ($MF_j$) à installer comportant au moins :
- une valeur de type de filtre par autorisation ou refus de transmission d'un message de requête de diffusion IP Multicast,
- une adresse de groupe (IP(G)) Multicast,
- une adresse IP(S) de la source de diffusion du flux IP Multicast ;
- sinon, suite à un échec (3') d'authentification et/ou d'identification et de vérification réussies des droits d'accès dont dispose ledit terminal utilisateur, par ledit serveur de contrôle d'accès, le procédé consiste au moins à transmettre (4') dudit serveur de contrôle d'accès vers ledit équipement de collecte un message de refus d'autorisation d'accès (AAR) et à inhiber (5') la connexion du terminal utilisateur à l'équipement de collecte.

**2.** Procédé selon la revendication 1, **caractérisé en ce que** chaque filtre Multicast à installer comporte au moins :

- une valeur fonctionnelle (FV) de mise à jour par adjonction ou suppression d'un filtre IP Multicast existant ;
- un numéro d'identification (IDMF) de filtre IP Multicast.

**3.** Procédé selon l'une des revendications 1 ou 2, **caractérisé en ce que** celui-ci consiste en outre, suite à la transmission dudit message d'acceptation d'autorisation d'accès $(\mathrm{AAA}(MF_j)_1^N)$, sous le contrôle dudit serveur de contrôle d'accès, à :

- transmettre (2a) dudit serveur de contrôle d'accès vers ledit équipement de collecte un message de changement d'autorisation d'accès $(\mathrm{AC}(MF_j)_1^N)$ ; et, sur acceptation et exécution (3 a) du changement d'autorisation d'accès par ledit équipement de collecte,
- transmettre (4a) dudit équipement de collecte vers ledit serveur de contrôle d'accès un message de notification

d'acceptation et d'exécution du changement d'autorisation d'accès (NOT(AC)) par ledit équipement de collecte ; sinon, sur rejet (3'a) et absence d'exécution du changement d'autorisation d'accès,
- transmettre (4a') dudit équipement de collecte vers ledit serveur de contrôle d'accès un message de refus et de non exécution du changement d'autorisation d'accès ($\overline{NOT(AC)}$) par ledit équipement de collecte.

4. Procédé selon la revendication 3, **caractérisé en ce que** ledit message de changement d'autorisation d'accès $(AC\ (MF_j)_1^N)$ comporte au moins un filtre IP Multicast dont la valeur fonctionnelle est une valeur fonctionnelle de mise à jour par adjonction ou suppression d'au moins un filtre IP Multicast existant.

5. Procédé selon l'une des revendications 1 ou 2, **caractérisé en ce que** celui-ci consiste en outre, sous le contrôle dudit serveur de contrôle d'accès, à :

- transmettre (1b, 2b) dudit serveur de contrôle d'accès vers ledit équipement de collecte un message de renouvellement d'autorisation d'accès (AR) ; et, sur prise en compte (3b) du renouvellement d'autorisation d'accès par ledit équipement de collecte,
- transmettre (4b) dudit équipement de collecte vers ledit serveur de contrôle d'accès un message de notification de prise en compte du renouvellement d'autorisation d'accès (NOT(AR)) par ledit équipement de collecte ; sinon, en l'absence (6b) de prise en compte du renouvellement d'autorisation d'accès par ledit équipement de collecte ;
- transmettre (7b) dudit équipement de collecte vers ledit serveur de contrôle d'accès un message de notification d'absence de prise en compte du renouvellement d'autorisation d'accès (AAD).

6. Procédé selon la revendication 5, **caractérisé en ce que** ledit message de renouvellement d'autorisation d'accès (AR) comporte au moins un filtre IP Multicast dont la valeur fonctionnelle est une valeur fonctionnelle de mise à jour par suppression d'un filtre IP Multicast existant.

7. Procédé selon l'une des revendications 1 à 6, **caractérisé en ce que** toute demande d'autorisation ou de réautorisation d'accès transmise dudit équipement de collecte audit serveur de contrôle d'accès est suivie d'une étape de vérification des droits d'accès du terminal utilisateur demandeur exécutée par ledit serveur de contrôle d'accès.

8. Message d'autorisation d'accès, de changement d'autorisation d'accès ou de renouvellement d'autorisation d'accès à une diffusion IP Multicast, **caractérisé en ce qu'**il comporte au moins un filtre IP Multicast apte à être installé sur un équipement de collecte pour analyser un message de requête de diffusion de flux IP Multicast transmis par un terminal utilisateur, chaque filtre IP Multicast à installer comprenant au moins une valeur de type de filtre ($T_y$) par autorisation ou refus de transmission d'un message de requête de diffusion IP Multicast, une adresse de groupe (IP(G)) Multicast et une adresse IP(S) de la source de diffusion du flux IP Multicast.

9. Serveur de contrôle d'accès à un flux IP Multicast, **caractérisé en ce que** celui-ci comporte au moins un module ($MA_1$...$Ma_x$) générateur de messages d'autorisation d'accès apte à générer un message de refus d'autorisation (AAR) pour inhiber la connexion d'un terminal utilisateur à un équipement de collecte et un message d'acceptation d'autorisation d'accès $(AAA(MF_j)_1^N)$ comportant au moins un filtre Multicast ($MF_j$) apte à être installé sur un équipement de collecte pour analyser un message de requête de diffusion de flux IP Multicast transmis par le terminal utilisateur, chaque filtre Multicast ($MF_j$) à installer comportant au moins une valeur de type de filtre par autorisation ou refus de transmission d'un message de requête de diffusion IP Multicast, une adresse de groupe (IP(G)) Multicast et une adresse IP(S) de la source de diffusion du flux IP Multicast.

10. Équipement de collecte d'un message de requête de diffusion IP Multicast, **caractérisé en ce qu'**il comporte au moins des moyens ($MC_1$) générateurs d'un message de demande d'autorisation d'accès (AAD) vers un serveur de contrôle d'accès connecté au réseau IP et des moyens de réception d'un message d'acceptation d'autorisation d'accès $(AAA(MF_j)_1^N)$ comportant au moins un filtre Multicast ($MF_j$) apte à être installé sur un équipement de collecte pour analyser un message de requête de diffusion de flux IP Multicast transmis par un terminal utilisateur,

respectivement un message de refus d'autorisation d'accès (AAR), transmis par ledit serveur de contrôle d'accès, chaque filtre Multicast ($MF_j$) à installer comportant au moins une valeur de type de filtre par autorisation ou refus de transmission d'un message de requête de diffusion IP Multicast, une adresse de groupe (IP(G)) Multicast et une adresse IP(S) de la source de diffusion du flux IP Multicast.

**11.** Équipement de collecte selon la revendication 10, **caractérisé en ce qu'**il comporte des moyens ($MC_2$) de mémorisation de messages d'acceptation d'autorisation d'accès délivrés par un serveur de contrôle d'accès et d'installation ($MC_3$) d'une pluralité de filtres Multicast.

**12.** Équipement de collecte selon la revendication 11, **caractérisé en ce que** lesdits moyens d'installation ($MC_3$) d'une pluralité de filtres Multicast exécutent un processus d'installation de filtres Multicast consistant au moins, pour chaque filtre Multicast reçu, à :

- extraire du message d'acceptation d'autorisation de diffusion IP Multicast chaque filtre Multicast,
- évaluer le contenu du filtre Multicast candidat à installation ; et sur évaluation de la valeur fonctionnelle de suppression,
- supprimer le filtre Multicast existant correspondant puis installer le filtre Multicast candidat à installation, sinon, sur évaluation de la valeur fonctionnelle d'adjonction ou de mise à jour du filtre candidat à installation,
- installer le filtre Multicast candidat à installation.

**13.** Programme d'ordinateur enregistré sur un support de mémorisation comportant une suite d'instructions pour exécution par un ordinateur ou un dispositif dédié, tel qu'un serveur de contrôle d'accès à un flux IP Multicast, **caractérisé en ce que**, lors de cette exécution, ladite suite d'instructions permet la mise en oeuvre des étapes d'authentification et/ou d'identification et de vérification des droits d'accès d'un terminal utilisateur et de transmission, de ce serveur de contrôle d'accès vers un équipement de collecte, d'un message d'acceptation ou de refus d'acceptation d'accès du procédé de contrôle d'accès à un flux IP Multicast demandé par ce terminal utilisateur, selon l'une des revendications 1 à 7.

**14.** Programme d'ordinateur enregistré sur un support de mémorisation comportant une suite d'instructions pour exécution par un ordinateur ou un dispositif dédié, tel qu'un équipement de collecte d'un message de requête de diffusion IP Multicast émis par un terminal utilisateur, **caractérisé en ce que**, lors de cette exécution, ladite suite d'instructions permet la mise en oeuvre de l'étape de transmission, dudit équipement de collecte vers un serveur de contrôle d'accès, d'un message de demande d'autorisation d'accès et la réception par ledit équipement de collecte d'un message d'acceptation d'accès respectivement d'un message de refus d'autorisation d'accès selon le procédé selon l'une des revendication 1 à 7.

## Claims

**1.** Method of controlling access to a Multicast IP stream requested by a user terminal from an item of Multicast IP stream broadcasting request message item of item of collection equipment (CE) connected to the IP network, in which following the connection by this user terminal to this item of collection equipment, a message (AAD) requesting access authorization is transmitted (1, 2) from this item of collection equipment to an access control server (ACS), connected to the IP network, the method being **characterized in that**:

- following successful authentication and/or identification and verification of the access rights of said user terminal by said access control server, the method consists at least in transmitting (3, 4) from said access control server to said item of collection equipment a message accepting access authorization $(\mathrm{AAA}(MF_j)_1^N)$, comprising at least one multicast filter ($MF_j$), installing (5) in said item of collection equipment the at least one multicast filter transmitted and in analysing a message requesting broadcasting of a Multicast IP stream transmitted by the user terminal in relation to said at least one installed multicast filter, each Multicast filter ($MF_j$) to be installed comprising at least:
- a value of type of filter per authorization or denial of transmission of a Multicast IP broadcast request message,
- a Multicast group address (IP(G)),
- an address IP(S) of the source broadcasting the Multicast IP stream;
- otherwise, following a failure (3') of successful authentication and/or identification and verification of the access

rights available to said user terminal, by said access control server, the method consists at least in transmitting (4') from said access control server to said item of collection equipment a message denying access authorization (AAR) and in prohibiting (5') the connection of the user terminal to the item of collection equipment.

**2.** Method according to Claim 1, **characterized in that** each Multicast filter to be installed comprises at least:

- a functional value (FV) for updating by adding or deleting an existing Multicast IP filter;
- a Multicast IP filter identification number (IDMF).

**3.** Method according to either of Claims 1 and 2, **characterized in that** it furthermore consists, following the transmission of said access authorization acceptance message $(AAA(MF_j)_1^N)$, under the control of said access control server, in:

- transmitting (2a) from said access control server to said item of collection equipment an access authorization change message $(AC(MF_j)_1^N)$; and, on acceptance and execution (3a) of the change of access authorization by said item of collection equipment,
- transmitting (4a) from said item of collection equipment to said access control server a message notifying acceptance and execution of the change of access authorization (NOT (AC)) by said item of collection equipment; otherwise, on rejection (3'a) and absence of execution of the change of access authorization,
- transmitting (4'a) from said item of collection equipment to said access control server a message of denial and non-execution of the change of access authorization ($\overline{NOT(AC)}$) by said item of collection equipment.

**4.** Method according to Claim 3, **characterized in that** said access authorization change message $(AC(MF_j)_1^N)$, comprises at least one Multicast IP filter whose functional value is a functional value for updating by adding or deleting at least one existing Multicast IP filter.

**5.** Method according to either of Claims 1 and 2, **characterized in that** it furthermore consists, under the control of said access control server, in:

- transmitting (1b, 2b) from said access control server to said item of collection equipment an access authorization renewal message (AR); and, on consideration (3b) of the access authorization renewal by said item of collection equipment,
- transmitting (4b) from said item of collection equipment to said access control server a message notifying consideration of the access authorization renewal (NOT (AR)) by said item of collection equipment; otherwise, in the absence (6b) of consideration of the access authorization renewal by said item of collection equipment;
- transmitting (7b) from said item of collection equipment to said access control server a message notifying absence of consideration of the access authorization renewal (AAD).

**6.** Method according to Claim 5, **characterized in that** said access authorization renewal message comprises at least one Multicast IP filter whose functional value is a functional value for updating by deleting an existing Multicast IP filter.

**7.** Method according to one of Claims 1 to 6, **characterized in that** any access authorization or reauthorization request transmitted from said item of collection equipment to said access control server is followed by a step of verifying the access rights of the requesting user terminal, executed by said access control server.

**8.** Message for authorizing access, changing access authorization or renewing authorization to access a Multicast IP broadcast, **characterized in that** it comprises at least one Multicast IP filter able to be installed on a item of collection equipment so as to analyse a message requesting broadcasting of a Multicast IP stream transmitted by a user terminal, each Multicast IP filter to be installed comprising at least one value of filter type ($T_y$) per authorization or denial of transmission of a Multicast IP broadcasting request message, a Multicast group address (IP(G)) and an address IP(s) for the broadcasting source of the Multicast IP Stream.

**9.** Server for controlling access to a Multicast IP stream, **characterized in that** the latter comprises at least one module ($MA_y$ ... $MA_x$) generating access authorization messages, able to generate an authorization denial message (AAR) so as to prohibit the connection of a user terminal to a item of collection equipment and an access authorization

acceptance message $(\mathrm{AAA}(MF_j)_1^N)$ comprising at least one Multicast filter ($MF_j$) able to be installed on a item of collection equipment so as to analyse a Multicast IP stream broadcast request message transmitted by the user terminal, each Multicast filter ($MF_j$) to be installed comprising at least one value of filter type per authorization or denial of transmission of a Multicast IP broadcast request message, a Multicast group address (IP(G)) and an address IP(S) of the source of the broadcasting of the Multicast IP stream.

**10.** Item of equipment for collecting a Multicast IP broadcasting request message, **characterized in that** it comprises at least means ($MC_1$) generating an access authorization request message (AAD) to an access control server connected to the IP network and means for receiving an access authorization acceptance message $(\mathrm{AAA}(MF_j)_1^N)$ comprising at least one Multicast filter ($MF_j$) able to be installed on a item of collection equipment so as to analyse a Multicast IP stream broadcast request message transmitted by a user terminal, respectively an access authorization denial message (AAR), transmitted by said access control server, each Multicast filter ($MF_j$) to be installed comprising at least one value of type of filter per authorization or denial of transmission of a Multicast IP broadcast request message, a Multicast group address (IP(G)) and an address IP(S) of the broadcasting source of the Multicast IP stream.

**11.** Item of collection equipment according to Claim 10, **characterized in that** it comprises means for storing ($MC_2$) access authorization acceptance messages delivered by an access control server and for installing ($MC_3$) a plurality of Multicast filters.

**12.** Item of collection equipment according to Claim 11, **characterized in that** said means for installing ($MC_3$) a plurality of Multicast filters execute a process for installing Multicast filters consisting at least, for each Multicast filter received, in:

- extracting from the Multicast IP broadcasting authorization acceptance message each Multicast filter,
- evaluating the content of the Multicast filter which is a candidate for installation; and on evaluation of the deletion functional value,
- deleting the corresponding existing Multicast filter then installing the Multicast filter which is a candidate for installation, otherwise, on evaluation of the functional value for adding or updating the filter which is a candidate for installation,
- installing the Multicast filter which is a candidate for installation.

**13.** Computer program recorded on a storage medium comprising a series of instructions for execution by a computer or a dedicated device, such as a server for controlling access to a Multicast IP stream, **characterized in that**, during this execution, said series of instructions allows the implementation of the steps of authenticating and/or identifying and verifying the access rights of a user terminal and of transmitting, from this access control server to an item of collection equipment, an access acceptance or acceptance denial message of the method of controlling access to a Multicast IP stream requested by this user terminal, according to one of Claims 1 to 7.

**14.** Computer program recorded on a storage medium comprising a series of instructions for execution by a computer or a dedicated device, such as equipment for collecting a Multicast IP broadcasting request message sent by a user terminal, **characterized in that**, during this execution, said series of instructions allows the implementation of the step of transmitting, from said item of collection equipment to an access control server, an access authorization request message and the reception by said item of collection equipment of an access acceptance message or of an access authorization denial message of the method according to one of Claims 1 to 7.

## Patentansprüche

**1.** Verfahren zur Kontrolle des Zugriffs auf einen IP-Multicast-Fluss, der durch ein Benutzer-Endgerät von einer mit dem IP-Netzwerk verbundenen Sammeleinrichtung (CE) von Anforderungsmitteilungen einer IP-Multicast-Fluss-Aussendung angefordert wird, bei dem, nach der Verbindung durch dieses Benutzer-Endgerät zu dieser Sammeleinrichtung, eine Anforderungsmitteilung einer Zugriffsgenehmigung (AAD) von dieser Sammeleinrichtung an einen mit dem IP-Netzwerk verbundenen Zugriffskontrollserver (ACS) übertragen wird (1, 2), wobei das Verfahren **dadurch gekennzeichnet ist, dass**:

- nach einer erfolgreichen Authentifizierung und/oder Identifizierung und Überprüfung der Zugriffsrechte, über die das Benutzer-Endgerät verfügt, durch den Zugriffskontrollserver, das Verfahren mindestens darin besteht, vom Zugriffskontrollserver an die Sammeleinrichtung eine Zugriffsgenehmigungs-Akzeptanzmitteilung ($AAA\left(MF_j\right)_1^N$) zu übertragen (3, 4), die mindestens ein Multicast-Filter ($MF_j$) enthält, in der Sammeleinrichtung das mindestens eine übertragene Multicast-Filter zu installieren (5), und eine vom Benutzer-Endgerät übertragene Anforderungsmitteilung der IP-Multicast-Fluss-Aussendung gegenüber dem mindestens einen installierten Multicast-Filter zu analysieren, wobei jedes zu installierende Multicast-Filter ($MF_j$) mindestens aufweist:
- einen Filtertypwert durch Genehmigung oder Verweigerung der Übertragung einer Anforderungsmitteilung der IP-Multicast-Aussendung,
- eine (IP(G))-Multicast-Gruppenadresse,
- eine IP(S)-Adresse der Aussendungsquelle des IP-Multicast-Flusses,
- ansonsten, nach einem Scheitern (3') einer erfolgreichen Authentifizierung und/oder Identifizierung und Überprüfung der Zugriffsrechte, über die das Benutzer-Endgerät verfügt, durch den Zugriffskontrollserver, das Verfahren mindestens darin besteht, vom Zugriffskontrollserver an die Sammeleinrichtung eine Verweigerungsmitteilung der Zugriffsgenehmigung (AAR) zu übertragen (4') und die Verbindung des Benutzer-Endgeräts mit der Sammeleinrichtung zu verhindern (5').

**2.** Verfahren nach Anspruch 1, **dadurch gekennzeichnet, dass** jedes zu installierende Multicast-Filter mindestens aufweist:

- einen funktionalen Aktualisierungswert (FV) durch Hinzufügen oder Entfernen eines existierenden IP-Multicast-Filters;
- eine IP-Multicast-Filter-Identifikationsnummer (IDMF).

**3.** Verfahren nach einem der Ansprüche 1 oder 2, **dadurch gekennzeichnet, dass** dieses außerdem nach der Übertragung der Zugriffsgenehmigungs-Akzeptanzmitteilung ($AAA\left(MF_j\right)_1^N$) unter der Kontrolle des Zugriffskontrollservers darin besteht:

- vom Zugriffskontrollserver zur Sammeleinrichtung eine Zugriffsgenehmigungs-Änderungsmitteilung ($AC\left(MF_j\right)_1^N$) zu übertragen (2a), und nach Akzeptanz und Ausführung (3a) der Zugriffsgenehmigungsänderung durch die Sammeleinrichtung,
- von der Sammeleinrichtung an den Zugriffskontrollserver eine Akzeptanz- und Ausführungsbenachrichtigungsmitteilung der Zugriffsgenehmigungsänderung (NOT(AC)) durch die Sammeleinrichtung zu übertragen (4a), ansonsten, bei Zurückweisung (3'a) und Abwesenheit einer Ausführung der Zugriffsgenehmigungsänderung,
- von der Sammeleinrichtung an den Zugriffskontrollserver eine Mitteilung der Zurückweisung und Nichtausführung der Zugriffsgenehmigungsänderung ($\overline{NOT(AC)}$) durch die Sammeleinrichtung zu übertragen (4a').

**4.** Verfahren nach Anspruch 3, **dadurch gekennzeichnet, dass** die Zugriffsgenehmigungs-Änderungsmitteilung ($AC\left(MF_j\right)_1^N$) mindestens ein IP-Multicast-Filter aufweist, dessen funktionaler Wert ein funktionaler Wert der Aktualisierung durch Hinzufügen oder Entfernen mindestens eines existierenden IP-Multicast-Filters ist.

**5.** Verfahren nach einem der Ansprüche 1 oder 2, **dadurch gekennzeichnet, dass** dieses unter der Kontrolle des Zugriffskontrollservers außerdem darin besteht:

- vom Zugriffskontrollserver an die Sammeleinrichtung eine Mitteilung der Zugriffsgenehmigungserneuerung (AR) zu übertragen (1b, 2b); und nach Berücksichtigung (3b) der Zugriffsgenehmigungserneuerung durch die Sammeleinrichtung,
- von der Sammeleinrichtung zum Zugriffskontrollserver eine Benachrichtigungsmitteilung über die Berücksichtigung der Zugriffsgenehmigungserneuerung (NOT(AR)) durch die Sammeleinrichtung zu übertragen (4b); ansonsten, in Abwesenheit (6b) einer Berücksichtigung der Zugriffsgenehmigungerneuerung durch die Sammeleinrichtung;

- von der Sammeleinrichtung an den Zugriffskontrollserver eine Benachrichtigungsmitteilung über die Abwesenheit einer Berücksichtigung der Zugriffsgenehmigungserneuerung (AAD) zu übertragen (7b).

**6.** Verfahren nach Anspruch 5, **dadurch gekennzeichnet, dass** die Mitteilung der Zugriffsgenehmigungserneuerung (AR) mindestens ein IP-Multicast-Filter aufweist, dessen funktionaler Wert ein funktionaler Aktualisierungswert durch Entfernen eines existierenden IP-Multicast-Filters ist.

**7.** Verfahren nach einem der Ansprüche 1 bis 6, **dadurch gekennzeichnet, dass** auf jede Zugriffsgenehmigungs- oder erneute Zugriffsgenehmigungsanfrage, die von der Sammeleinrichtung an den Zugriffskontrollserver übertragen wird, ein Überprüfungsschritt der Zugriffsrechte des anfragenden Benutzer-Endgeräts folgt, der vom Zugriffskontrollserver ausgeführt wird.

**8.** Mitteilung einer Zugriffsgenehmigung, Änderung der Zugriffsgenehmigung oder Erneuerung der Zugriffsgenehmigung auf eine IP-Multicast-Aussendung, **dadurch gekennzeichnet, dass** sie mindestens ein IP-Multicast-Filter aufweist, das in einer Sammeleinrichtung installiert werden kann, um eine Anforderungsmitteilung einer IP-Multicast-Fluss-Aussendung zu analysieren, die von einem Benutzer-Endgerät übertragen wird, wobei jedes zu installierende IP-Multicast-Filter mindestens einen Filtertypwert ($T_y$) durch Genehmigung oder Verweigerung der Übertragung einer Anforderungsmitteilung einer IP-Multicast-Aussendung, eine Multicast-Gruppenadresse (IP(G)) und eine Adresse IP(S) der Aussendungsquelle des IP-Multicast-Flusses enthält.

**9.** Zugriffskontrollserver zu einem IP-Multicast-Fluss, **dadurch gekennzeichnet, dass** dieser mindestens ein Erzeugungsmodul ($MA_1$ ... $Ma_x$) von Zugriffsgenehmigungsmitteilungen aufweist, das eine Genehmigungsverweigerungsmitteilung (AAR), um die Verbindung eines Benutzer-Endgeräts mit einer Sammeleinrichtung zu verhindern, und eine Zugriffsgenehmigungs-Akzeptanzmitteilung ( $AAA\left(MF_j\right)_1^N$ ) erzeugen kann, die mindestens ein Multicast-Filter ($MF_j$) aufweist, das in einer Sammeleinrichtung installiert werden kann, um eine Anforderungsmitteilung einer IP-Multicast-Aussendung zu analysieren, die vom Benutzer-Endgerät übertragen wird, wobei jedes zu installierende Multicast-Filter ($MF_j$) mindestens einen Filtertypwert durch Genehmigung oder Verweigerung der Übertragung einer Anforderungsmitteilung einer IP-Multicast-Aussendung, eine Multicast-Gruppenadresse (IP(G)) und eine Adresse IP(S) der Aussendungsquelle des IP-Multicast-Flusses aufweist.

**10.** Sammeleinrichtung einer Anforderungsmitteilung einer IP-Multicast-Aussendung, **dadurch gekennzeichnet, dass** sie mindestens Erzeugereinrichtungen ($MC_1$) einer Zugriffsgenehmigungs-Anfragemitteilung (AAD) an einen mit dem IP-Netzwerk verbundenen Zugriffskontrollserver und Empfangseinrichtungen einer Zugriffsgenehmigungs-Akzeptanzmitteilung ( $AAA\left(MF_j\right)_1^N$ ) aufweist, die mindestens ein Multicast-Filter ($MF_j$) aufweist, das in einer Sammeleinrichtung installiert werden kann, um eine von einem Benutzer-Endgerät übertragene Anforderungsmitteilung einer IP-Multicast-Fluss-Aussendung bzw. eine vom Zugriffskontrollserver übertragene Verweigerungsmitteilung (AAR) einer Zugriffsgenehmigung zu analysieren, wobei jedes zu installierende Multicast-Filter ($MF_j$) mindestens einen Filtertypwert durch Genehmigung oder Verweigerung der Übertragung einer Anforderungsmitteilung einer IP-Multicast-Aussendung, eine Multicast-Gruppenadresse (IP(G)) und eine Adresse IP(S) der Aussendungsquelle des IP-Multicast-Flusses aufweist.

**11.** Sammeleinrichtung nach Anspruch 10, **dadurch gekennzeichnet, dass** sie Einrichtungen ($MC_2$) zur Speicherung von Zugriffsgenehmigungs-Akzeptanzmitteilungen, die von einem Zugriffskontrollserver geliefert werden, und zur Installierung ($MC_3$) einer Vielzahl von Multicast-Filtern aufweist.

**12.** Sammeleinrichtung nach Anspruch 11, **dadurch gekennzeichnet, dass** die Einrichtungen zur Installierung ($MC_3$) einer Vielzahl von Multicast-Filtern einen Installierungsprozess von Multicast-Filtern ausführen, der zumindest für jedes empfangene Multicast-Filter darin besteht:

- jedes Multicast-Filter aus der Akzeptanzmitteilung der IP-Multicast-Aussendungsgenehmigung zu entnehmen,
- den Inhalt des Multicast-Installierungs-Kandidatfilters zu bewerten, und nach der Bewertung des funktionalen Entfernungswerts,
- das entsprechende existierende Multicast-Filter zu entfernen, und dann das Multicast-Installierungs-Kandidatfilter zu installieren, ansonsten, bei Bewertung des funktionalen Zufügungs- oder Aktualisierungswerts des

Installierungs-Kandidatfilters,
- Installieren des Multicast-Installierungs-Kandidatfilters.

**13.** Computerprogramm, das auf einem Speicherträger gespeichert ist, der eine Folge von Anweisungen zur Ausführung durch einen Computer oder eine dedizierte Vorrichtung, wie einen Zugriffskontrollserver zu einem IP-Multicast-Fluss, aufweist, **dadurch gekennzeichnet, dass** bei dieser Ausführung die Folge von Anweisungen die Durchführung der Schritte der Authentifizierung und/oder Identifizierung und Überprüfung der Zugriffsrechte eines Benutzer-Endgeräts, und der Übertragung, von diesem Zugriffskontrollserver zu einer Sammeleinrichtung, einer Akzeptanz- oder Akzeptanzverweigerungsmitteilung des Zugriffs des Zugriffskontrollverfahrens auf einen IP-Multicast-Fluss, der von diesem Benutzer-Endgerät angefordert wird, nach einem der Ansprüche 1 bis 7 erlaubt.

**14.** Computerprogramm, das auf einem Speicherträger gespeichert ist, der eine Folge von Anweisungen für die Ausführung durch einen Computer oder eine dedizierte Vorrichtung, wie eine Sammeleinrichtung, einer Anforderungsmitteilung einer IP-Multicast-Aussendung aufweist, die von einem Benutzer-Endgerät gesendet wird, **dadurch gekennzeichnet, dass** bei dieser Ausführung die Folge von Anweisungen die Durchführung des Übertragungsschritts, von der Sammeleinrichtung zu einem Zugriffskontrollserver, einer Zugriffsgenehmigungs-Anforderungsmitteilung und den Empfang, durch die Sammeleinrichtung, einer Zugriffsakzeptanzmitteilung bzw. einer Zugriffsgenehmigungs-Verweigerungsmitteilung nach dem Verfahren nach einem der Ansprüche 1 bis 7 erlaubt.

FIG.1.

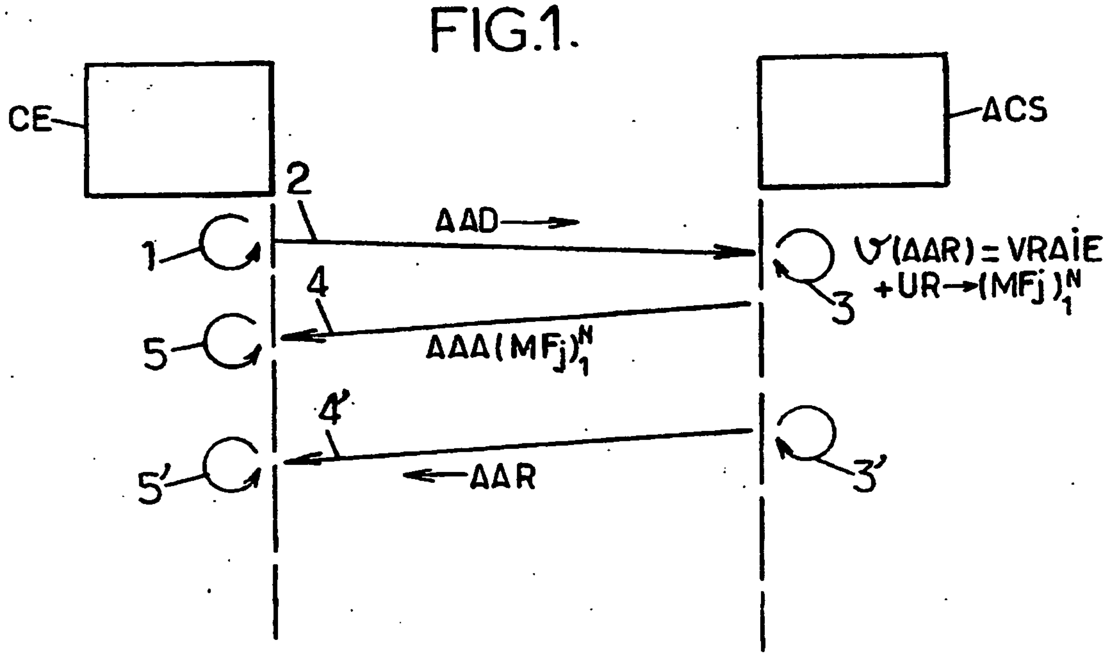

FIG.2a.

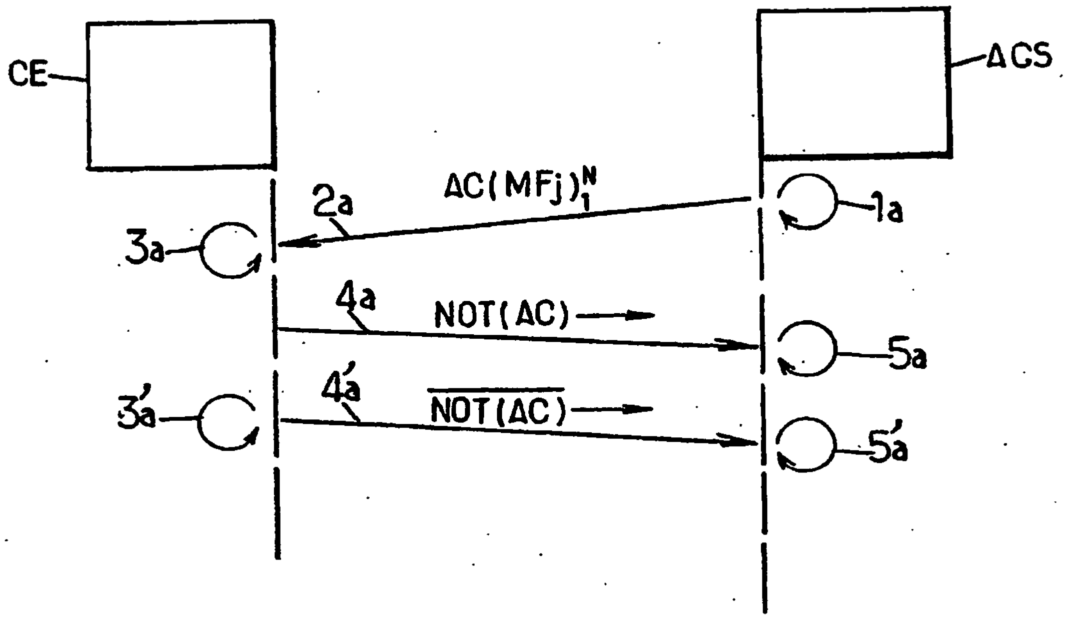
CE
ACS
AC(MFj)$_1^N$
2a
1a
3a
4a
NOT(AC)
5a
3a'
4a'
NOT(AC) (overlined)
5a'

FIG.2b.

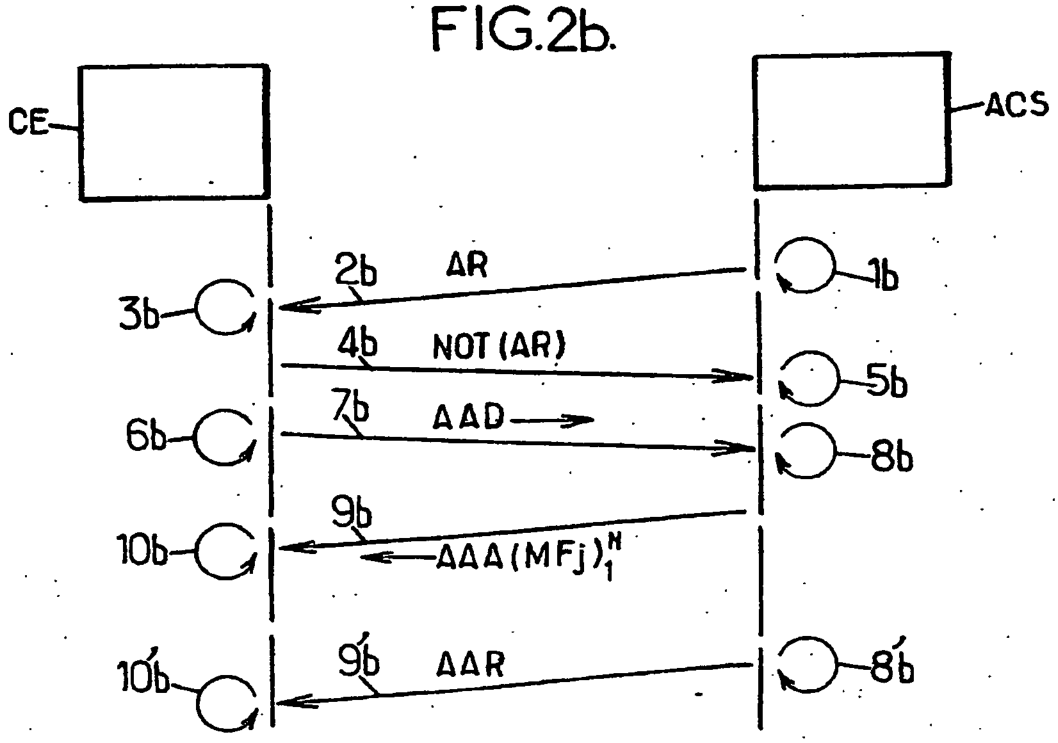
CE
ACS
2b
AR
1b
3b
4b
NOT(AR)
5b
6b
7b
AAD
8b
9b
10b
AAA(MFj)$_1^N$
10b'
9b'
AAR
8b'

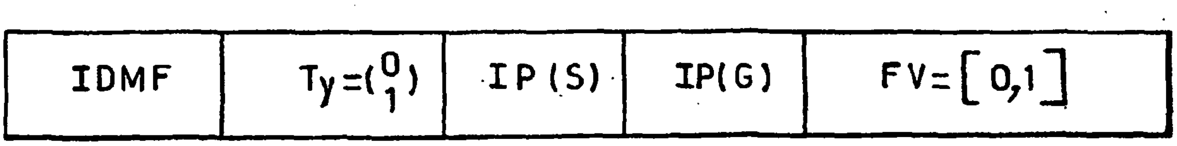
IDMF
Ty=(0 1)
IP(S)
IP(G)
FV=[0,1]

FIG.3a.

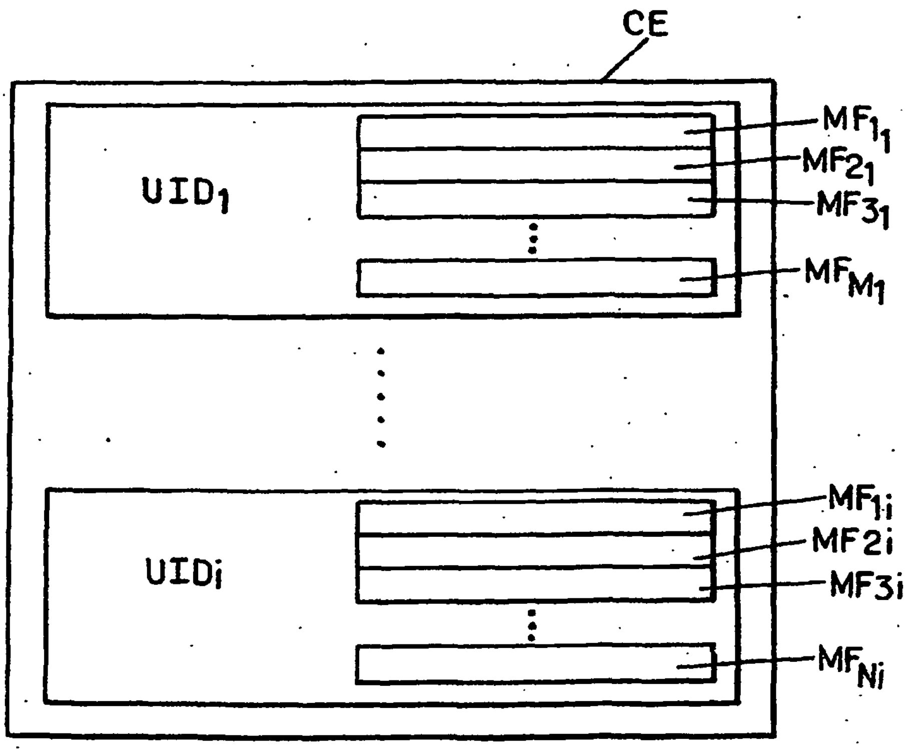
CE
UID1
MF11
MF21
MF31
MFM1
UIDi
MF1i
MF2i
MF3i
MFNi

FIG.3b.

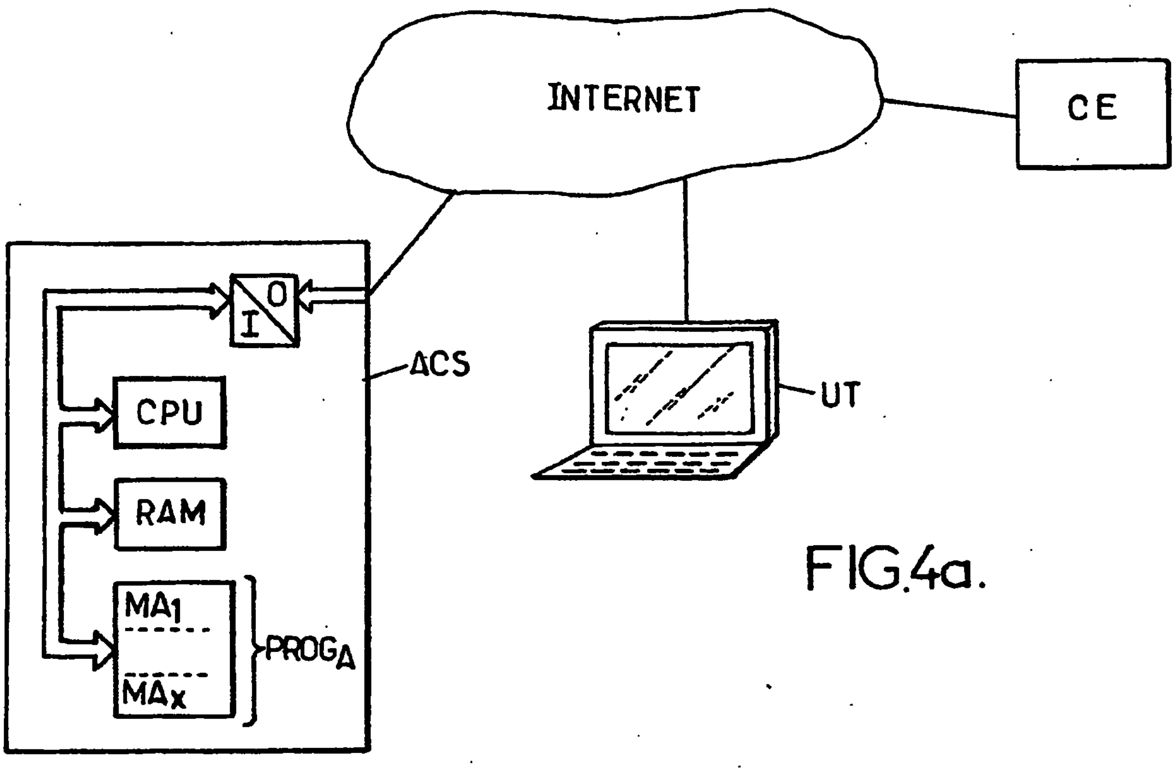
INTERNET
CE
ACS
UT
CPU
RAM
MA1
MAx
PROGA
I
O

FIG.4a.

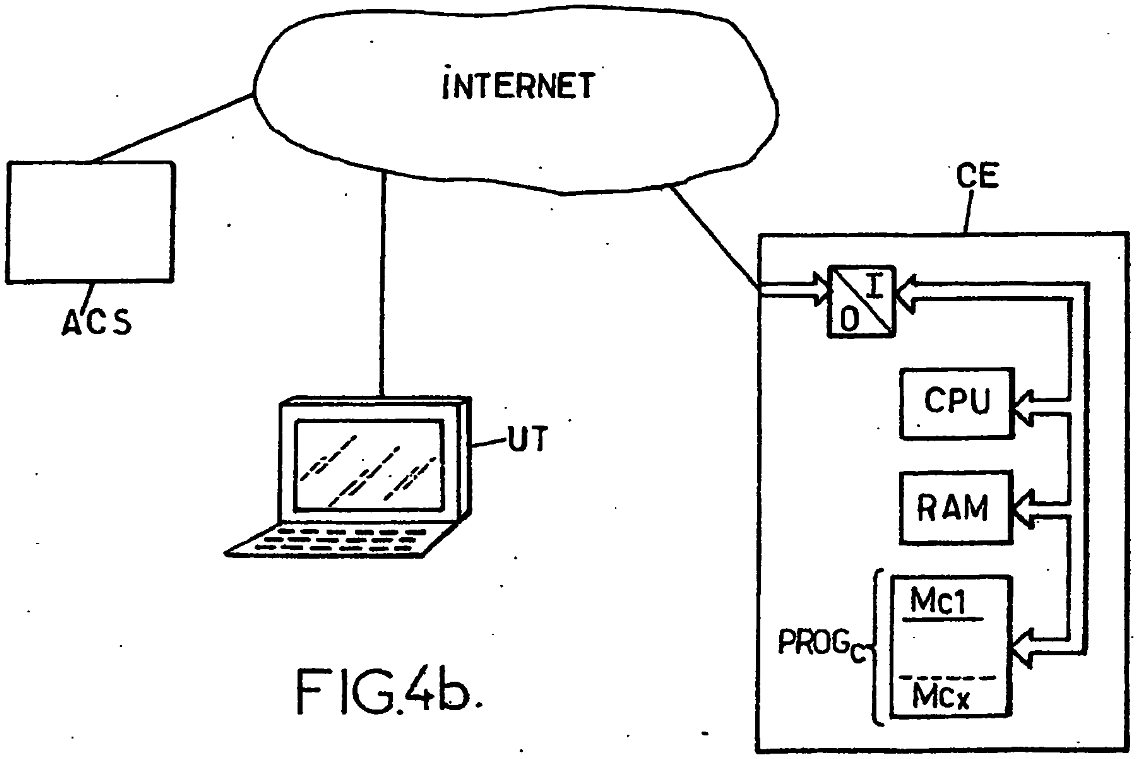
INTERNET
ACS
UT
CE
CPU
RAM
Mc1
Mcx
PROGC
I
O

FIG.4b.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1492381 A